# EUROPÄISCHE PATENTSCHRIFT

(11) **EP 3 460 429 B1**
(45) Veröffentlichungstag und Bekanntmachung des Hinweises auf die Patenterteilung: **30.12.2020**
(21) Anmeldenummer: 17192662.9
(22) Anmeldetag: 22.09.2017
(51) Int. Cl.: G01K 1/14, G01D 11/24

(54) **TRÄGERELEMENT FÜR EINEN ELEKTRISCHEN SENSOR, ELEKTRISCHER SENSOR SOWIE VERFAHREN ZUR HERSTELLUNG EINES ELEKTRISCHEN SENSORS**
CARRIER ELEMENT FOR AN ELECTRICAL SENSOR, ELECTRICAL SENSOR AS WELL AS METHOD FOR MAKING AN ELECTRICAL SENSOR
ÉLÉMENT DE SUPPORT POUR UN CAPTEUR ÉLECTRIQUE, CAPTEUR ÉLECTRIQUE AINSI QUE PROCÉDÉ DE FABRICATION D'UN CAPTEUR ÉLECTRIQUE

(43) Veröffentlichungstag der Anmeldung: 27.03.2019
(73) Patentinhaber: PGT THERMPROZESSTECHNIK GMBH, 53842 Troisdorf (DE)
(72) Erfinder: SCHUBERT, Harald, 53859 Niederkassel (DE); GROMMES, Günter, 53721 Siegburg (DE); PFISTER, Holger, 51688 Wipperfürth (DE)
(74) Vertreter: Maiwald Patent- und Rechtsanwaltsgesellschaft mbH

(56) Entgegenhaltungen:
- DE-B3- 10 233 880
- DE-C1- 4 424 630

## Beschreibung

Die Erfindung betrifft ein Trägerelement für einen elektrischen Sensor, insbesondere für einen Temperatursensor, mit den Merkmalen des Oberbegriffs des Anspruchs 1. Ferner betrifft die Erfindung einen elektrischen Sensor, insbesondere einen Temperatursensor, mit einem solchen Trägerelement, wobei das Trägerelement der Aufnahme eines Messwiderstands des Sensors dient. Ferner wird ein Verfahren zur Herstellung eines elektrischen Sensors, insbesondere eines Temperatursensors, vorgeschlagen.

### Stand der Technik

Ein Temperatursensor geht beispielhaft aus der Patentschrift DE 102 33 880 B3 hervor. Er umfasst ein Messelement mit Anschlussleitungen, wobei das Messelement und die Anschlussleitungen jeweils in Aussparungen eines Trägerelements aus einem elektrisch isolierenden Material gehalten sind. Das Trägerelement ist von einem Gehäuse umgeben, wobei zwischen dem Gehäuse und dem Trägerelement ein Keramikvlies zur Schwingungsdämpfung und thermischen Anbindung angeordnet ist.

Aus der Patentschrift DE 44 24 630 C1 ist ein Temperaturfühler mit einem elektrisch isolierenden Tragkörper bekannt, an dem ein Messwiderstand mit zwei Anschlussleitungen festgelegt ist. Zur Aufnahme des Messwiderstands weist der Tragkörper stirnseitig eine schlitzartige Ausnehmung auf, in den der Messwiderstand mit den beiden Anschlussleitungen voran eingesetzt wird. Die Anschlussleitungen kommen auf diese Weise beidseits eines durch den Tragkörper ausgebildeten Mittelstegs zu liegen. Die Anschlussleitungen sind mit Anschlussleitungen eines Anschlusskabels verbunden, das vom anderen Ende her an den Tragkörper herangeführt worden ist. Die Verbindungsstellen sind vorzugsweise als Crimp-Verbindungen ausgeführt, so dass eine Verbindung ohne Verwendung von Klebern oder Loten hergestellt werden kann. Dadurch soll der Temperaturfühler für Dauereinsatztemperaturen bis zu 180°C geeignet sein. Die Anschlussleitungen sind über einen Teil ihrer Länge von einer fixierenden, isolierenden Umhüllung in Form eines aufgeschrumpften Kunststoffschlauchs umgeben, der zugleich eine Zugentlastung des Messwiderstands und der Anschlussleitungen bewirken soll. Die äußere Hülle des Temperaturfühlers bildet eine Hülse, die im Bereich des Messwiderstands geschlossen ausgeführt ist.

Ausgehend von dem vorstehend genannten Stand der Technik liegt der vorliegenden Erfindung die Aufgabe zugrunde, die Herstellung eines elektrischen Sensors, insbesondere eines Temperatursensors, weiter zu vereinfachen. Zugleich soll ein elektrischer Sensor, insbesondere ein Temperatursensor, bereitgestellt werden, der eine hohe Messgenauigkeit und ein verbessertes Ansprechverhalten aufweist. Ferner soll der Sensor über einen möglichst breiten Messbereich einsetzbar sein.

Zur Lösung der Aufgabe werden das Trägerelement mit den Merkmalen des Anspruchs 1, der elektrische Sensor mit den Merkmalen des Anspruchs 13 sowie das Verfahren zur Herstellung eines elektrischen Sensors mit den Merkmalen des Anspruchs 16 vorgeschlagen. Vorteilhafte Weiterbildungen der Erfindung sind den jeweiligen Unteransprüchen zu entnehmen.

### Offenbarung der Erfindung

Das vorgeschlagene Trägerelement ist länglich ausgeführt und weist in einem ersten Endabschnitt eine Aufnahme für einen Messwiderstand sowie in einem an den Endabschnitt anschließenden weiteren Abschnitt mindestens zwei sich in Längsrichtung erstreckende und durch einen Steg voneinander getrennte Führungen zur Führung von Anschlussdrähten auf. Erfindungsgemäß ist das Trägerelement zumindest im Bereich des ersten Endabschnitts und des weiteren Abschnitts drehsymmetrisch ausgebildet, so dass es durch Drehung um eine Längsachse A um einen Winkel α auf sich selbst abbildbar ist, wobei vorzugsweise der Winkel α 180°, 120° oder 90° beträgt.

Aufgrund der drehsymmetrischen Ausbildung weist erfindungsgemäß das vorgeschlagene Trägerelement mindestens zwei Aufnahmen und mindestens vier Führungen auf. Das heißt, dass das Trägerelement mit mehr als nur einem Messwiderstand und/oder mit einem weiteren elektrischen bzw. elektronischen Bauelement, wie beispielsweise einem Schaltelement, bestückbar ist. Das Trägerelement kann somit als Baugruppenträger eingesetzt werden, was den Einsatz weiterer Trägerelemente entbehrlich macht. Die Messwiderstände und/oder Bauelemente können auf einem einzigen Trägerelement montiert werden, so dass auf diese Weise ein kompakt bauender elektrischer Sensor herstellbar ist.

Die Bestückbarkeit des Trägerelements mit mehr als nur einem Messwiderstand und/oder einem weiteren elektrischen bzw. elektronischen Bauelement, wie beispielsweise einem Schaltelement, hat mehrere Vorteile. Beispielsweise kann das Trägerelement mit mehreren gleichen Messwiderständen bestückt werden, so dass ein redundantes System geschaffen wird, das eine erhöhte Ausfall- und damit Funktionssicherheit besitzt. Alternativ kann das Trägerelement mit mehreren unterschiedlichen, insbesondere unterschiedliche Messbereiche abdeckenden Messwiderständen bestückt werden. Auf diese Weise kann ein elektrischer Sensor geschaffen werden, der über einen sehr breiten Messbereich einsetzbar ist. Wird das Trägerelement zugleich mit einem Schaltelement bestückt, kann dieses zum Schalten des mindestens einen Messwiderstands und/oder eines weiteren Bauelements genutzt werden. Das weitere Bauelement muss dabei nicht zwingend auf dem Trägerelement angeordnet sein. Des Weiteren kann mit Hilfe des Schaltelements ein bestimmter Messwiderstand zu- oder abgeschaltet werden. Dies ist insbesondere bei mehreren unterschiedlichen Messwiderständen, die unterschiedliche Messbereiche abdecken, von Vorteil. Das Schaltelement kann insbesondere ein Mikroschalter sein, da dieser besonders klein ist.

Das Trägerelement kann in der Weise drehsymmetrisch ausgebildet sein, dass es auf sich selbst abgebildet wird, wenn es um die Längsachse A um einen Winkel α = 180° gedreht wird. In diesem Fall weist das Trägerelement zwei Aufnahmen für zwei Messwiderstände bzw. für einen Messwiderstand und ein weiteres elektrisches/elektronisches Bauelement sowie vier Führungen zur Aufnahme bzw. Führung von vier Anschlussdrähten auf. Beträgt der Winkel α nicht 180°, sondern 120°, bildet das Trägerelement drei Aufnahmen für drei Messwiderstände bzw. für zwei Messwiderstände und ein weiteres elektrisches/elektronisches Bauelement sowie sechs Führungen für Anschlussdrähte aus. Bei einem Winkel α = 90° kann das Trägerelement vier Messwiderstände bzw. drei Messwiderstände und ein weiteres elektrisches/elektronisches Bauelement sowie acht Anschlussdrähte aufnehmen. Selbstverständlich ist es ebenso möglich, mehr als nur ein elektrisches/elektronisches Bauelement, insbesondere Schaltelement, neben dem mindestens einen Messwiderstand auf dem Trägerelement anzuordnen.

Die Führungen des Trägerelements dienen insbesondere der Aufnahme und Führung der Anschlussdrähte eines Messwiderstands bzw. eines elektrischen/elektronischen Bauelements. Bevorzugt weist jeder Messwiderstand bzw. jedes Bauelement zwei Anschlussdrähte auf, so dass die Anzahl der Führungen jeweils das Zweifache der Anzahl der Aufnahmen für die Messwiderstände und/oder das Bauelement beträgt.

Alternativ oder ergänzend können die Führungen auch der Aufnahme und Führung von Anschlussdrähten eines Anschlusskabels dienen, die es mit den Anschlussdrähten eines Messwiderstands bzw. elektrischen/elektronischen Bauelements elektrisch zu verbinden gilt. Sofern zwei Messwiderstände oder ein Messwiderstand mit einem elektrischen/elektronischen Bauelement mit insgesamt vier Anschlussdrähten auf dem Trägerelement angeordnet werden sollen, ist ein Anschlusskabel mit vier Anschlussdrähten bzw. -leitungen vorzusehen. Denn anstelle eines einzelnen Anschlussdrahts kann auch eine Anschlusslitze vorgesehen sein, die aus mehreren Einzeldrähten besteht.

Der Einfachheit halber wird vorliegend nicht zwischen einem einfachen Draht und einer Litze unterschieden, so dass der Begriff "Anschlussdraht" vorliegend auch eine Anschlusslitze umfasst, welche aus mehreren Einzeldrähten besteht. Ferner kann der Anschlussdraht bzw. die Anschlusslitze eine isolierende Ummantelung aufweisen, die ggf. vor der Herstellung einer elektrischen Verbindung mit einem weiteren Anschlussdraht entfernt werden muss.

Wird ein mit mehreren Messwiderständen bestücktes Trägerelement zur Herstellung eines elektrischen Sensors, insbesondere eines Temperatursensors, mit Kunststoff umspritzt und/oder in ein Gehäuse eingesetzt, können aufgrund der Drehsymmetrie des Trägerelements alle Messwiderstände in gleichem Abstand zur Außenumfangsfläche des Sensors angeordnet werden. Auf diese Weise können gleiche Ansprechzeiten der mehreren Messwiderstände realisiert werden. Ferner kann das Ansprechverhalten der mehreren Messwiderstände optimiert werden, wenn zugleich die Querschnittsform der Umspritzung und/oder des Gehäuses an die des Trägerelements einschließlich der hierin eingesetzten Messwiderstände angepasst wird bzw. eine möglichst geringe Überdeckung der Messwiderstände gewählt wird. Dies gilt im Besonderen, wenn - gemäß einer bevorzugten Ausführungsform der Erfindung - zum Umspritzen ein thermisch leitfähiger Kunststoff verwendet wird.

Gemäß einer bevorzugten Ausführungsform der Erfindung weist das Trägerelement eine zentrale, massiv ausgebildete Tragstruktur auf, die sich zumindest über den ersten Endabschnitt und den weiteren Abschnitt erstreckt. Das heißt, dass das Trägerelement im Kern massiv ausgebildet ist, so dass es eine hohe Formsteifigkeit besitzt. Das Trägerelement trägt somit zu einer Stabilisierung des mindestens einen auf dem Trägerelement angeordneten Messwiderstands bei. Ferner wird eine Zugentlastung des Messwiderstands und/oder der Anschlussdrähte bewirkt, da die hohe Formsteifigkeit einer Verbiegung des Trägerelements entgegenwirkt. Dies ist insbesondere von Vorteil, wenn das Trägerelement einschließlich des Messwiderstands bzw. der Messwiderstände in eine Form zum Umspritzen mit Kunststoff eingelegt wird, da die Gefahr, dass das Trägerelement durch den einströmenden Kunststoff zur Seite gedrückt wird, auf ein Minimum reduziert ist.

Bevorzugt sind jeweils eine Aufnahme für den Messwiderstand und zwei Führungen zur Führung der Anschlussdrähte, vorzugsweise der Anschlussdrähte des jeweiligen Messwiderstands, zu einer Längsseite des Trägerelements hin geöffnet, wobei es sich um dieselbe Längsseite handelt. Das heißt, dass der Messwiderstand und die Anschlussdrähte in einfacher Weise und im Wesentlichen zeitgleich in die Aufnahme bzw. in die Führungen eingesetzt werden können. Die Anschlussdrähte müssen nicht erst aufwendig von der Stirnseite des Trägerelements her eingefädelt werden. Auf diese Weise kann die Herstellung des Sensors vereinfacht werden.

Des Weiteren wird vorgeschlagen, dass jeweils eine Aufnahme eine Anlagefläche für den Messwiderstand aufweist. Über die Anlagefläche der Aufnahme ist der Messwiderstand optimal abgestützt. Vorzugsweise erstreckt sich die Anlagefläche parallel zur Längsachse A des Trägerelements. Weiterhin vorzugsweise ist die Anlagefläche stirnseitig und/oder an mindestens einer Längsseite durch einen Steg begrenzt. Der mindestens eine Steg bildet einen Anschlag für den Messwiderstand aus, so dass hierüber die Position des Messwiderstands in mindestens eine Richtung festlegbar ist. Liegen sich zwei Stege an der Anlagefläche gegenüber, kann der Messwiderstand beim Einsetzen in die Aufnahme zwischen den beiden Stegen eingeklemmt werden, so dass eine gewisse Lagefixierung erreicht wird. Der Abstand der beiden Stege ist in diesem Fall an die jeweilige Abmessung des Messwiderstands angepasst. Ferner kann der mindestens eine Steg zur dauerhaften Lagefixierung des Messwiderstands genutzt werden, wenn er durch mechanisches oder thermisches Verstemmen plastisch verformt wird, so dass er den Messwiderstand an zumindest einer Seite umgreift. Auf diese Weise wird ein Formschluss erzielt, der den Messwiderstand dauerhaft in Position hält. Alternativ oder ergänzend kann der mindestens eine Steg endseitig eine Rastnase aufweisen, die hinter den Messwiderstand greift, wenn dieser in die Aufnahme des Trägerelements eingesetzt wird. Um den verrastenden Eingriff der Rastnase des Stegs mit dem Messwiderstand herzustellen, ist vorzugsweise der Steg zumindest geringfügig elastisch verformbar ausgebildet.

Sofern eine der Aufnahmen des Trägerelements der Aufnahme eines elektrischen bzw. elektronischen Bauelements, wie beispielsweise eines Schaltelements, dient, kann diese analog der Aufnahme für einen Messwiderstand ausgebildet sein. Gegebenenfalls sind die Abmessungen anzupassen.

Ferner bevorzugt weist der die Führungen für die Anschlussdrähte voneinander trennende Steg zumindest abschnittsweise parallel verlaufende Seitenflächen auf, die zur Aufnahme hin schräg aufeinander zulaufen. Das heißt, dass in der Draufsicht die Breite des Stegs zur Aufnahme hin abnimmt. Die schrägen Seitenflächen des Stegs vereinfachen das Einlegen bzw. Einfädeln der Anschlussdrähte in die beidseits des Stegs ausgebildeten Führungen, da sie beim Führen über die schrägen Seitenflächen automatisch auseinandergedrückt werden. Zudem können die Anschlussdrähte über die schräg verlaufenden Seitenflächen weitgehend knickfrei geführt werden. Der die Führungen trennende Steg des Trägerelements dient der elektrischen Isolierung der Anschlussdrähte.

Um die Führung der Anschlussdrähte zu optimieren, wird vorgeschlagen, dass dem Steg - zumindest abschnittsweise - an den Führungen weitere Stege zur außenseitigen Begrenzung der Führungen gegenüberliegen. Die Führungen sind demnach - zumindest abschnittsweise - als im Wesentlichen U-förmige Kanäle ausgebildet. Durch die außenliegenden Stege sind die Anschlussdrähte, insbesondere beim Umspritzen mit Kunststoff, vor einem Herausfallen aus den Führungen gesichert.

Ferner wird die Formsteifigkeit des Trägerelements durch die außenliegenden Stege weiter erhöht. Vorteilhafterweise sind die außenliegenden Stege weniger hoch als der in Bezug auf die Führungen innenliegende Steg ausgebildet. Das Trägerelement weist somit eine an einen Kreis angenäherte Querschnittsform auf, so dass das Trägerelement - mit oder ohne Umspritzung - einfach in ein hohlzylinderförmiges Gehäuse einsetzbar ist.

In Weiterbildung der Erfindung wird vorgeschlagen, dass das Trägerelement in einem zweiten Endabschnitt mindestens zwei sich in Längsrichtung erstreckende und durch einen Steg voneinander getrennte Führungen zur Führung von Anschlussdrähten eines Anschlusskabels aufweist. Das heißt, dass für die Aufnahme und Führung der Anschlussdrähte eines Anschlusskabels eigene Führungen vorgesehen sind, die an einem der Aufnahme für den Messwiderstand abgewandten Ende des Trägerelements ausgebildet sind. Die jeweilige Querschnittsform einer Führung kann somit optimal an die Abmessung des jeweils aufzunehmenden Anschlussdrahts angepasst werden. Denn die Abmessungen der Anschlussdrähte können variieren, beispielsweise, weil mehrere Einzeldrähte zu einer Litze zusammengefasst sind und/oder der Anschlussdraht von einer Isolierung umgeben ist.

Vorzugsweise ist der Steg, der die Führungen für die Anschlussdrähte des Anschlusskabels voneinander trennt, in Verlängerung des Stegs angeordnet, der die Führungen für die Anschlussdrähte des Messwiderstands bzw. Bauelements voneinander trennt. Das heißt, dass vorzugsweise die beiden Stege in Längsrichtung fluchten. Die Anschlussdrähte des Anschlusskabels können auf diese Weise einfach an die Anschlussdrähte des Messwiderstands bzw. Bauelements herangeführt bzw. positioniert werden, um die erforderliche elektrische Verbindung der Anschlussdrähte herzustellen.

Der im zweiten Endabschnitt des Trägerelements ausgebildete Steg weist bevorzugt Seitenflächen auf, die Klemmnasen ausbilden. Über die Klemmnasen kann der freie Querschnitt der Führungen eingeschränkt werden, so dass die Anschlussdrähte über die Klemmnasen in den Führungen gehalten werden. Ferner kann auf diese Weise ein Toleranzausgleich geschaffen werden.

Vorzugsweise sind die Klemmnasen axial versetzt in Bezug auf weitere Klemmnasen angeordnet, die durch Stege ausgebildet werden, die dem Steg an den Führungen gegenüberliegen. Das heißt, dass die jeweils beidseits einer Führung angeordneten Klemmnasen in Längsrichtung des Trägerelements versetzt angeordnet sind, so dass sie abwechselnd von beiden Seiten in den freien Querschnitt der Führung hineinragen bzw. einen in die Führung eingelegten Anschlussdraht mit einer Klemmkraft beaufschlagen. Dieser ist somit optimal in der Führung gehalten, so dass eine Lagefixierung und zugleich eine Zugentlastung bewirkt werden.

Vorzugsweise sind der im zweiten Endabschnitt ausgebildete Steg und der mit diesem Steg fluchtend ausgebildete Steg in einem axialen Abstand zueinander angeordnet. "Axial" bedeutet auch in diesem Zusammenhang in Längsrichtung des Trägerelements bzw. parallel zur Längsachse A. Der axiale Abstand zwischen den beiden Stegen definiert einen weiteren Abschnitt des Trägerelements. In diesem weiteren Abschnitt wird vorzugsweise die elektrische Verbindung der Anschlussdrähte des Messwiderstands bzw. des Bauelements mit den Anschlussdrähten des Anschlusskabels hergestellt, da dieser Bereich leicht zugänglich ist.

Des Weiteren wird vorgeschlagen, dass der zweite Endabschnitt des Trägerelements stirnseitig eine zentrale Ausnehmung zum Einführen des Anschlusskabels aufweist. Vorzugsweise wird die Ausnehmung von Federarmen begrenzt, die in Verlängerung der Stege des Endabschnitts durch das Trägerelement ausgebildet werden. Über die Federarme wird das Anschlusskabel bevorzugt klemmend gehalten. Die Führungen zur Führung der Anschlussdrähte münden vorzugsweise in die Ausnehmung, so dass beim Einführen des Anschlusskabels in die Ausnehmung die Anschlussdrähte des Anschlusskabels automatisch in die Führungen eingefädelt werden.

Vorteilhafterweise ist das Trägerelement aus Kunststoff, insbesondere aus einem elektrisch isolierenden und thermisch leitfähigen Kunststoff, gefertigt. Die thermische Leitfähigkeit des Kunststoffs ist insbesondere bei Verwendung des Trägerelements zur Herstellung eines Temperatursensors von Vorteil, da sie die Ansprechzeit des Sensors verbessert.

Ferner wird vorgeschlagen, dass das Trägerelement ein Spritzgussteil ist, das heißt ein durch Spritzgießen hergestelltes Formteil ist. Auf diese Weise lässt sich das Trägerelement in großen Stückzahlen besonders einfach und kostengünstig herstellen. Als Vorteil erweist sich in diesem Zusammenhang auch, dass das Trägerelement im Kern massiv ausgebildet ist, insbesondere keine allseitig umschlossenen Hohlräume und/oder Hinterschneidungen aufweist.

Zur Lösung der eingangs genannten Aufgabe wird darüber hinaus ein elektrischer Sensor, insbesondere Temperatursensor, vorgeschlagen, der ein erfindungsgemäßes Trägerelement und mindestens einen mehrere Anschlussdrähte aufweisenden Messwiderstand umfasst, wobei der Messwiderstand in einer Aufnahme des Trägerelements und die Anschlussdrähte in Führungen des Trägerelements aufgenommen sind. Der Messwiderstand einschließlich seiner Anschlussdrähte wird über das Trägerelement gehalten und zugleich stabilisiert. Denn die vergleichsweise hohe Formsteifigkeit des Trägerelements stützt den Messwiderstand. Dies ist insbesondere von Vorteil, wenn der Messwiderstand nachträglich mit Kunststoff umspritzt werden soll, um ihn vor äußeren Einwirkungen zu schützen. In diesem Fall erleichtert das Trägerelement eine genaue Positionierung des Messwiderstands in dem Spritzgießwerkzeug, so dass eine definierte Überdeckung des Messwiderstands mit Kunststoff einfach zu realisieren ist. Das Trägerelement kann demnach als Halter und als Positionierhilfe dienen.

Ferner wird eine elektrische Isolierung der Anschlussdrähte des Messwiderstands bewirkt, da diese in Führungen aufgenommen sind, die durch einen Steg des Trägerelements getrennt werden. Das Trägerelement dient demnach auch als Isolierbauteil.

Zudem kann das Trägerelement mit mehreren Messwiderständen oder mit mindestens einem Messwiderstand und einem weiteren elektrischen bzw. elektronischen Bauelement, beispielsweise mit einem Schaltelement, bestückt werden. Bei Verwendung mehrerer gleicher Messwiderstände, die redundante Informationen liefern, kann das Ausfallrisiko minimiert bzw. die Funktionssicherheit des Sensors erhöht werden. Darüber hinaus können gezielt Messwiderstände unterschiedlicher Charakteristik eingebaut werden, so dass eine an den jeweiligen Bedarf angepasste Bestückung vorgenommen werden kann. Beispielsweise können Messwiderstände mit unterschiedlichen Ansprechzeiten und/oder unterschiedlichen elektrischen Anschlusswerten eingesetzt werden. Auf diese Weise kann ein Sensor geschaffen werden, der - bei zugleich hoher Messgenauigkeit - einen breiten Messbereich abzudecken vermag. Wird zusätzlich zu dem mindestens einen Messwiderstand das Trägerelement mit mindestens einem weiteren elektrischen bzw. elektronischen Bauelement, wie beispielsweise einem Schaltelement, bestückt, kann der elektrische Sensor noch vielseitiger eingesetzt werden.

Aufgrund der Drehsymmetrie des Trägerelements ist zudem sichergestellt, dass die Messwiderstände über den Umfang gleichmäßig verteilt angeordnet sind. Bei einer nachträglichen Umspritzung des Trägerelements mit Kunststoff kann zugleich die Querschnittsform der Umspritzung in einfacher Weise an die Querschnittsform des Trägerelements angepasst werden, so dass alle Messelemente gleichmäßig mit Kunststoff überdeckt sind. Das heißt, dass alle Messwiderstände den gleichen Abstand zur Sensoroberfläche aufweisen, so dass ferner gleiche Ansprechzeiten realisierbar sind.

Soll das Trägerelement zur Ausbildung des elektrischen Sensors mit mehreren Messwiderständen und/oder mindestens einem elektrischen bzw. elektronischen Bauelement bestückt werden, erweist es sich als Vorteil, wenn Messwiderstände bzw. Bauelemente verwendet werden, die möglichst klein bzw. kleinvolumig sind. Auf diese Weise kann ein elektrischer Sensor geschaffen werden, der besonders kompaktbauend ist und einen geringen Bauraumbedarf besitzt. Vorteilhafterweise finden daher Messwiderstände Einsatz, die in einer Dünnschichttechnologie hergestellt worden sind.

Zur Herstellung eines Temperatursensors kann beispielsweise ein Platin-Messwiderstand, insbesondere ein Platin-Chip-Temperatursensor mit Anschlussdrähten nach DIN EN 60751, verwendet werden. Dieser weist eine flache Bauform mit seitlich austretenden Anschlussdrähten auf. Darüber hinaus kann ein NTC-Widerstand (englisch: "Negative Temperature Coefficient", abgekürzt: "NTC") als Messwiderstand eingesetzt werden, der besonders kleinvolumig ist und demnach die Ausbildung eines miniaturisierten Temperatursensors ermöglicht. Bei dem elektrischen bzw. elektronischen Bauelement kann es sich insbesondere um einen Mikroschalter handeln.

Bei dem vorgeschlagenen elektrischen Sensor, insbesondere Temperatursensor, sind die Anschlussdrähte des mindestens einen Messwiderstands mit Anschlussdrähten eines Anschlusskabels elektrisch verbunden. Vorzugsweise sind die Anschlussdrähte des Anschlusskabels in weiteren Führungen des Trägerelements aufgenommen. Die weiteren Führungen erleichtern die Positionierung der Anschlussdrähte des Anschlusskabels in Bezug auf die Anschlussdrähte des Messwiderstands, so dass die Herstellung der erforderlichen elektrischen Verbindung vereinfacht wird. Ferner kann eine Fixierung der Anschlussdrähte bewirkt werden, wenn - gemäß einer bevorzugten Ausführungsform der Erfindung - der freie Querschnitt der Führungen durch Klemmnasen eingeschränkt wird. Vorzugsweise liegen sich dabei mehrere Klemmnasen einer Führung axial versetzt zueinander an der Führung gegenüber. Auf diese Weise kann eine verbesserte Fixierung der Anschlussdrähte bewirkt werden, welche zugleich eine Zugentlastung gewährleistet.

Bei dem vorgeschlagenen Sensor sind vorzugsweise das Trägerelement einschließlich des Messwiderstands bzw. der Messwiderstände und der Anschlussdrähte mit Kunststoff umspritzt. Die Kunststoff-Umspritzung schützt den Messwiderstand bzw. die Messwiderstände vor äußeren Einwirkungen. Insbesondere wird über die Kunststoff-Umspritzung eine Abdichtung des Sensors erreicht, welche die elektrischen Bauteile vor Feuchtigkeit schützt. Entsprechend steigt die Robustheit des elektrischen Sensors, der somit vielseitig einsetzbar und/oder integrierbar ist. Sofern neben dem mindestens einen Messwiderstand das Trägerelement zugleich mit einem elektrischen bzw. elektronischen Bauelement bestückt ist, wird auch dieses durch die Kunststoff-Umspritzung vor äußeren Einwirkungen, insbesondere vor Feuchtigkeit, geschützt.

Die Kunststoff-Umspritzung weist vorzugsweise eine kreisrunde Querschnittsform auf, so dass die Kunststoff-Umspritzung zur Ausbildung eines Sensors führt, der eine kreiszylinderförmige Außenkontur besitzt. Der Sensor kann somit in jeder beliebigen Winkellage verbaut werden. Zudem ist er in einfacher Weise in ein hülsenförmiges bzw. hohlzylinderförmiges Gehäuse einsetzbar.

Die Kunststoff-Umspritzung kann aber auch eine von einem Kreis abweichende Querschnittsform aufweisen, beispielsweise um minimale Überdeckungsstärken zu erreichen. Denn je geringer die Überdeckung eines Messwiderstands mit Kunststoff ist, desto besser ist in der Regel das Ansprechverhalten. Bevorzugt ist die Querschnittsform der Kunststoff-Umspritzung an die Querschnittsform des Trägerelements angepasst. Insbesondere kann die Kunststoff-Umspritzung analog dem Trägerelement drehsymmetrisch ausgebildet sein. Das heißt, dass die Kunststoff-Umspritzung auch eine zylinderförmige Außenkontur auf Basis eines Vielecks, insbesondere eines gleichseitigen Dreiecks oder eines Quadrats, aufweisen kann. Ist beispielsweise das Trägerelement drehsymmetrisch in Bezug auf einen Winkel α = 120° ausgebildet, so dass drei Messwiderstände über den Umfang verteilt angeordnet werden können, bietet sich eine dreieckige Querschnittsform der Kunststoff-Umspritzung an.

Der Kunststoff der Umspritzung ist vorzugsweise ein elektrisch isolierender und thermisch leitfähiger Kunststoff, so dass zum einen eine elektrische Isolierung der umspritzten Bauteile erreicht wird, zum anderen das Ansprechverhalten verbessert wird, wenn es sich bei dem elektrischen Sensor um einen Temperatursensor handelt. Der thermisch leitfähige Kunststoff trägt ferner dazu bei, dass der elektrische Sensor eine hohe Messgenauigkeit aufweist.

Alternativ oder ergänzend zu einer Umspritzung mit Kunststoff können das Trägerelement und der mindestens eine Messwiderstand in ein Gehäuse eingesetzt werden. Durch ein Gehäuse kann insbesondere die Robustheit des Sensors gegenüber mechanischen Beeinträchtigungen und/oder gegenüber aggressiven Medien erhöht werden.

Darüber hinaus wird ein Verfahren zur Herstellung eines elektrischen Sensors, insbesondere eines Temperatursensors, vorgeschlagen, bei dem ein erfindungsgemäßes Trägerelement mit mindestens einem Anschlussdrähte aufweisenden Messwiderstand bestückt wird, wobei der Messwiderstand in eine Aufnahme des Trägerelements eingesetzt und lagefixiert wird. Über das Trägerelement ist der Messwiderstand in einer vorgegebenen Position gehalten, so dass dieses einfacher mit einem Kunststoff umspritzt werden kann.

Die Lagefixierung des Messwiderstands wird vorzugsweise durch mechanisches oder thermisches Verstemmen bewirkt. Das heißt, dass kein weiteres Material erforderlich ist. Insbesondere kann auf einen Kleber oder ein Lot verzichtet werden.

Beim Einsetzen des Messwiderstands in die Aufnahme des Trägerelements werden vorzugsweise die Anschlussdrähte des Messwiderstands in Führungen des Trägerelements eingelegt. Das heißt, dass auch die Lage der Anschlussdrähte über die Führungen gesichert ist.

Anschließend können die Anschlussdrähte des Messwiderstands mit Anschlussdrähten eines Anschlusskabels elektrisch verbunden werden, die zuvor in weitere Führungen des Trägerelements eingelegt worden sind. Über die weiteren Führungen können die Anschlussdrähte des Anschlusskabels an die Anschlussdrähte des Messwiderstands herangeführt werden, so dass diese einander kontaktieren. Das Trägerelement kann demnach auch zur Positionierung der Anschlussdrähte des Anschlusskabels eingesetzt werden. Um die Anschlussdrähte in ihrer Position zu halten, können die Führungen Klemmnasen aufweisen, über welche die Anschlussdrähte klemmend in den Führungen gehalten werden. Mittels der Klemmnasen kann auf diese Weise zugleich eine Zugentlastung der Anschlussdrähte des Anschlusskabels und damit der Anschlussdrähte des Messwiderstands bewirkt werden.

Die elektrische Verbindung der Anschlussdrähte des Messwiderstands mit den Anschlussdrähten des Anschlusskabels wird vorzugsweise durch Verlöten, Verkleben, Verklemmen und/oder Verstemmen der Anschlussdrähte hergestellt. Da das Verklemmen und/oder Verstemmen kein zusätzliches Material, insbesondere keinen Kleber und kein Lot, erfordert, kann diese Art der elektrischen Verbindung besonders einfach hergestellt werden. Die jeweils zu verbindenden Anschlussdrähte werden hierzu bevorzugt abschnittsweise überlappend angeordnet, so dass ein ausreichend großer Kontaktbereich gewährleistet ist.

Des Weiteren wird vorgeschlagen, dass das Trägerelement einschließlich des mindestens einen Messwiderstands und der Anschlussdrähte in eine Spritzgießform eingelegt und mit Kunststoff umspritzt wird. Die Umspritzung mit Kunststoff bildet eine Schutzhülle aus, welche die elektrischen Bauteile des Sensors vor äußeren Einwirkungen schützt. Zugleich wird eine Abdichtung erreicht. Ein mit Kunststoff umspritzter elektrischer Sensor ist demnach besonders robust und somit vielseitig einsetzbar. Sofern es sich bei dem elektrischen Sensor um einen Temperatursensor handelt, wird vorzugsweise ein elektrisch isolierender und thermisch leitfähiger Kunststoff zum Umspritzen verwendet. Auf diese Weise kann ein Temperatursensor geschaffen werden, der weiterhin ein schnelles Ansprechverhalten und eine hohe Messgenauigkeit besitzt.

Die Umspritzung kann auch bereichsweise aus einem Kunststoff hergestellt werden, der nicht thermisch leitfähig ist. Im Bereich des Messwiderstands bzw. der Messwiderstände wird jedoch aus den vorstehend genannten Gründen die Verwendung eines thermisch leitfähigen Kunststoffs bevorzugt. Das heißt, dass zur Ausbildung der Umspritzung auch unterschiedliche Kunststoffe verwendet werden können.

Die Umspritzung mit Kunststoff erstreckt sich vorzugsweise bis zum Anschlusskabel und zwar weiterhin vorzugsweise bis zu einem Bereich des Anschlusskabels, in dem das Anschlusskabel von einer Isolierung umgeben ist. Auf diese Weise wird eine optimale Abdichtung des Sensors erreicht.

Die Erfindung und ihre Vorteile werden nachfolgend anhand der beigefügten Zeichnungen näher erläutert. Die Zeichnungen zeigen:
- Fig.1: eine perspektivische Darstellung eines erfindungsgemäßen Trägerelements,
- Fig. 2: eine erste Seitenansicht des Trägerelements der Fig. 1,
- Fig.3: eine zweite Seitenansicht des Trägerelements der Fig. 1, gegenüber der Seitenansicht der Fig. 2 um 90° gedreht,
- Fig. 4: einen Längsschnitt durch das Trägerelement der Fig. 1 entlang der Linie D-D,
- Fig. 5: einen Längsschnitt durch das Trägerelement der Fig. 1 entlang der Linie H-H,
- Fig. 6: einen Querschnitt durch das Trägerelement der Fig. 1 entlang der Linie E-E,
- Fig. 7: einen Querschnitt durch das Trägerelement der Fig. 1 entlang der Linie F-F,
- Fig. 8: einen Querschnitt durch das Trägerelement der Fig. 1 entlang der Linie G-G,
- Fig. 9: eine dritte Seitenansicht des Trägerelements der Fig. 1 quer zur Längsachse A,
- Fig. 10: eine vierte Seitenansicht des Trägerelements der Fig. 1 quer zur Längsachse A und
- Fig. 11: eine perspektivische Darstellung eines erfindungsgemäßen elektrischen Sensors mit dem Trägerelement der Fig. 1.

### Ausführliche Beschreibung der Zeichnungen

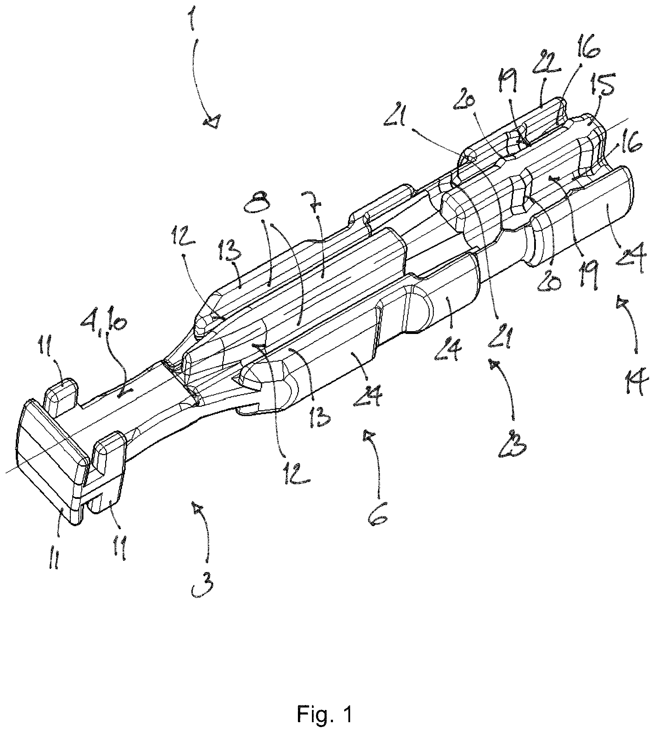

Das in der Fig. 1 perspektivisch dargestellte Trägerelement 1 dient der Herstellung eines elektrischen Sensors 2, insbesondere eines Temperatursensors. Es ist aus einem elektrisch isolierenden und thermisch leitfähigen Kunststoff mittels Spritzgießen hergestellt worden. Das heißt, dass es sich bei dem Trägerelement 1 um ein monolithisch ausgebildetes Spritzgussteil handelt.

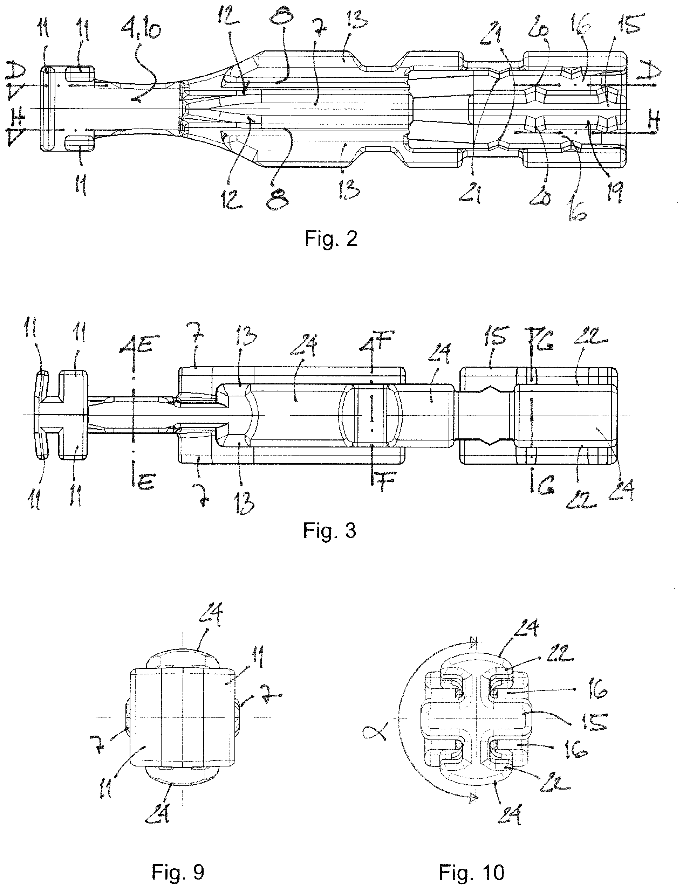

Das dargestellte Trägerelement 1 weist eine längliche Form auf und ist drehsymmetrisch in Bezug auf eine Längsachse A ausgebildet. Das heißt, dass das Trägerelement 1 auf sich selbst abgebildet wird, wenn es um einen vorgegebenen Winkel α gedreht wird. In dem dargestellten Ausführungsbeispiel beträgt der Winkel α = 180° (siehe Fig. 10). Dies hat vorliegend zur Folge, dass das Trägerelement 1 aus zwei Hälften besteht, die spiegelbildlich ausgeführt sind. Dies ist jedoch nicht zwingend der Fall, da der Winkel α auch 120° oder 90° betragen kann.

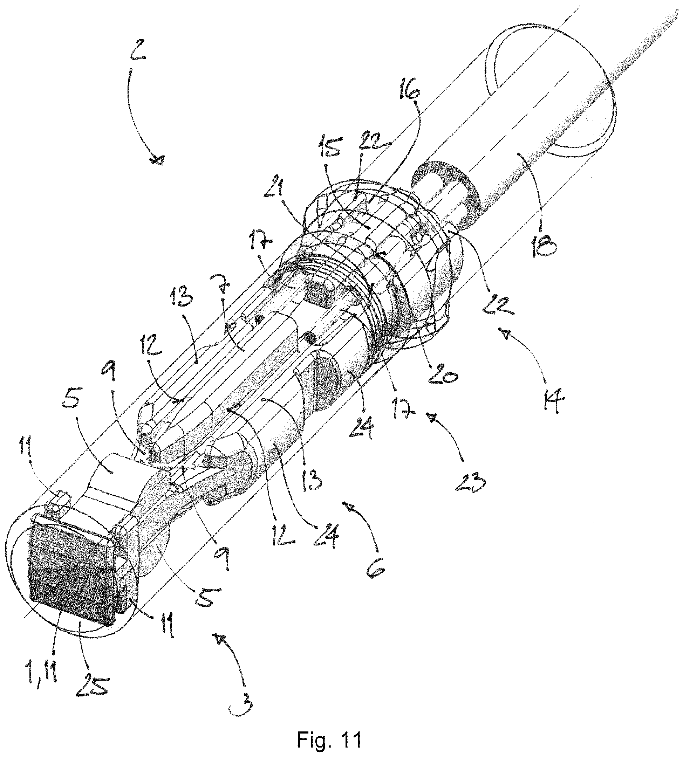

Das dargestellte Trägerelement 1 weist einen ersten Endabschnitt 3 auf, welcher der Aufnahme von Messwiderständen 5 dient. Hierbei kann es sich insbesondere um Platin-Messwiderstände 5 handeln, die in einer Dünnschichttechnologie hergestellt worden sind. Derartige Messwiderstände 5 sind vergleichsweise klein und weisen eine im Wesentlichen flache quaderförmige Grundform auf, so dass sie wenig Bauraum erfordern und einfach zu verbauen sind (siehe Fig. 11). Die Kontaktierung der Messwiderstände 5 erfolgt jeweils über zwei parallel geführte Anschlussdrähte 9.

Zur Aufnahme der Messwiderstände 5 bildet das Trägerelement 1 im ersten Endabschnitt 3 zwei Aufnahmen 4 aus, so dass das dargestellte Trägerelement 1 insgesamt zwei Messwiderstände 5 aufnehmen kann (siehe Fig. 11). Würde der Winkel α 120° betragen, könnte das Trägerelement 1 mit drei Messwiderständen 5 bestückt werden. Bei einem Winkel α = 90° könnte die Anzahl der Messwiderstände 5 auf vier erhöht werden. Die Aufnahmen 4 weisen jeweils eine im Wesentlichen rechteckige Anlagefläche 10 auf, die stirnseitig und längsseitig von Stegen 11 begrenzt wird. Die Abmessungen sind derart gewählt, dass die zur Anlage an den Anlageflächen 10 gebrachten Messwiderstände 5 durch die Stege 11 zunächst klemmend gehalten werden. Anschließend können die Stege 11 durch Verstemmen derart plastisch verformt werden, dass eine Lagefixierung mittels Formschluss erreicht wird.

An den ersten Endabschnitt 3 schließt sich ein Abschnitt 6 mit insgesamt vier Führungen 8 für die vier Anschlussdrähte 9 der beiden Messwiderstände 5 an (siehe Fig. 11). Bei drei Messwiderständen 5 würde die Anzahl der Führungen 8 sechs und bei vier Messwiderständen 5 acht betragen, da jeder Messwiderstand 5 zwei Anschlussdrähte 9 aufweist, die voneinander elektrisch isoliert werden müssen, um einen Kurzschluss zu verhindern. Die elektrische Isolierung zweier Führungen 8, die einer Aufnahme 4 zugeordnet sind, wird vorliegend durch einen mittig angeordneten Steg 7 bewirkt. Dieser weist Seitenflächen 12 auf, die in Richtung der Aufnahme 4 schräg aufeinander zulaufen (siehe Fig. 2), so dass die parallel verlaufenden Anschlussdrähte 9 über den Steg 7 auseinandergedrückt werden, wenn der zugehörige Messwiderstand 5 in die Aufnahme 4 eingesetzt wird. Parallel zum Steg 7 geführte Stege 13 verhindern, dass die Anschlussdrähte 9 aus den Führungen 8 herausfallen.

Bei einem in eine Aufnahme 4 eingesetzten Messwiderstand 5 kommen die Enden seiner Anschlussdrähte 9 in einem Abschnitt 23 des Trägerelements 1 zu liegen, welcher der elektrischen Verbindung der Anschlussdrähte 9 mit Anschlussdrähten 17 eines Anschlusskabels 18 dient. Der Abschnitt 23 ist hierzu im Wesentlichen eben ausgebildet und wird außenseitig von den Stegen 13 begrenzt. Der Steg 7 erstreckt sich lediglich über den Abschnitt 6 des Trägerelements 1. Auf diese Weise wird Platz geschaffen, um die erforderliche elektrische Verbindung der Anschlussdrähte 9, 17 herzustellen.

An den Abschnitt 23 schließt sich ein zweiter Endabschnitt 14 des Trägerelements 1 an, der Führungen 16 für die Anschlussdrähte 17 des Anschlusskabels 18 aufweist. Das Anschlusskabel 18 weist insgesamt vier Anschlussdrähte 17 auf, die auf vier Führungen 16 verteilt werden (siehe Fig. 11). Jeweils zwei Führungen 16 werden durch einen mittig angeordneten Steg 15 getrennt, der in Verlängerung eines Stegs 7 angeordnet ist, so dass die Stege 15 und 7 fluchten (siehe Fig. 2). Gleiches gilt im Wesentlichen für die Führungen 16 und 8, so dass die Anschlussdrähte 17 des Anschlusskabels 18 über die Führungen 16 an die Anschlussdrähte 9 der Messwiderstände 5 herangeführt und genau positioniert werden können, um anschließend die erforderliche elektrische Verbindung herzustellen.

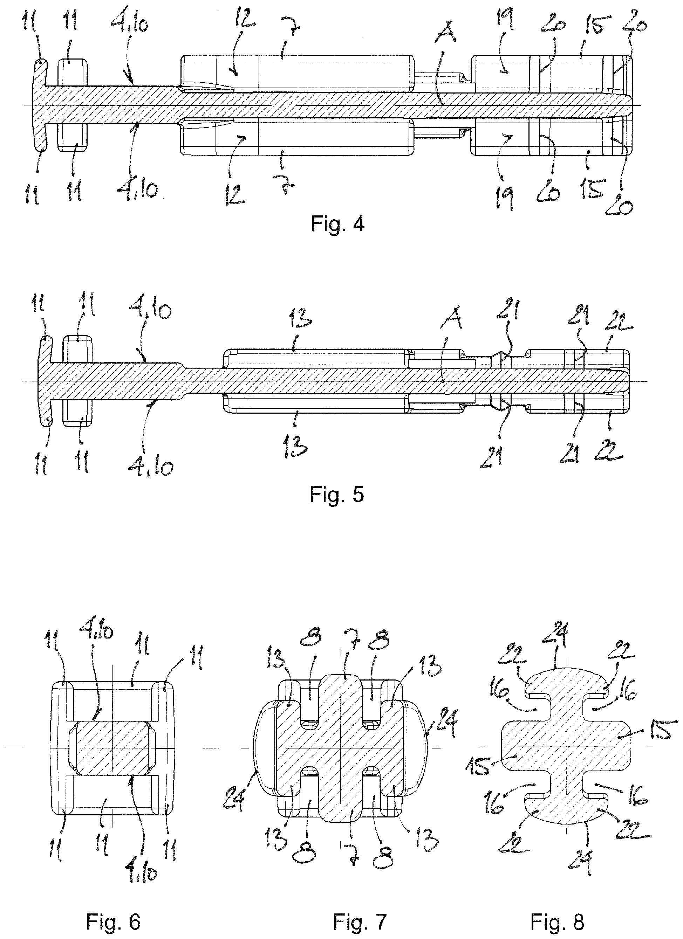

Um eine Zugentlastung der Anschlussdrähte 9 der Messwiderstände 5 zu bewirken, weisen die Führungen 16 für die Anschlussdrähte 17 des Anschlusskabels 18 Seitenflächen 19 auf, die Klemmnasen 20 ausbilden (siehe Fig. 4). Den Klemmnasen 20 liegen - in Längsrichtung versetzt - Klemmnasen 21 gegenüber, die durch Stege 22 ausgebildet werden, welche die Führungen 16 außenliegend begrenzen (siehe Fig. 5 und Fig. 2). Die Anschlussdrähte 17 werden demnach über die Klemmnasen 20, 21 in Position gehalten, wodurch die gewünschte Zugentlastung der Anschlussdrähte 9 der Messwiderstände 5 erreicht wird.

Wie insbesondere den Figuren 6, 7 und 8 zu entnehmen ist, weist das Trägerelement 1 in allen Abschnitten 3, 6, 23 und 14 einen massiv ausgeführten Kern auf, so dass es eine hohe Formsteifigkeit besitzt. Im Bereich des Endabschnitts 3, in dem die Aufnahmen 4 für die Messwiderstände 5 ausgebildet sind, weist das Trägerelement 1 eine im Wesentlichen rechteckige Querschnittsform auf (siehe Fig. 6). Im hieran anschließenden Abschnitt 6 wird der massive Kern zusätzlich durch die Stege 7, 13 verstärkt (siehe Fig. 7). Die außenliegenden Stege 13 weisen zudem seitliche Aufdickungen 24 auf, welche die Formsteifigkeit des Trägerelements 1 weiter erhöhen. Entsprechende Aufdickungen 24 bilden auch die Stege 22 aus (siehe Fig. 1, Fig. 3 und Fig. 8).

Im Bereich der Aufnahmen 4 für die Messwiderstände 5 weist das Trägerelement 1 eine geschlossene Stirnfläche auf (siehe Fig. 9). Diese wird durch die stirnseitig an den Aufnahmen 4 angeordneten Stege 11 ausgebildet. Über die stirnseitigen Stege 11 sind somit die Messwiderstände 5 in axialer Richtung, das heißt in Längsrichtung des Trägerelements 1 gehalten. Das Einsetzen der Messwiderstände 5 in die Aufnahmen 4 erfolgt von der jeweiligen Längsseite des Trägerelements 1 aus.

Im Bereich des zweiten Endabschnitts 14 sind die Führungen 16 für die Anschlussdrähte 17 des Anschlusskabels 18 bis an die Stirnfläche des Trägerelements 1 herangeführt (siehe Fig. 10), so dass das Anschlusskabel 18 zum Einlegen der Anschlussdrähte 17 in die Führungen 16 vorzugsweise von der Stirnseite her an das Trägerelement 1 herangeführt wird.

Gemäß einer nicht dargestellten Weiterbildung der Erfindung kann der zweite Endabschnitt 14 stirnseitig eine zentrale Ausnehmung aufweisen, in welche die Führungen 16 münden, so dass beim Einsetzen des Anschlusskabels 18 in die zentrale Ausnehmung des Trägerelements 1 die Anschlussdrähte 17 des Anschlusskabels 18 in die Führungen 16 eingefädelt werden können.

Zur Herstellung eines elektrischen Sensors 2, insbesondere eines Temperatursensors, wird vorzugsweise das Trägerelement 1 einschließlich der hierin eingesetzten Messwiderstände 5 und Anschlussdrähte 9, 17 abschließend mit einem Kunststoff 25 umspritzt (siehe Fig. 11). Der Kunststoff 25 dichtet den Sensor 2 ab und schützt somit die elektrischen Bauteile vor Feuchtigkeit. Hierzu ist wird die Umspritzung umlaufend ausgeführt und bis an das Anschlusskabel 18 herangeführt. Vorzugsweise, insbesondere, wenn der Sensor 2 ein Temperatursensor ist, wird ein elektrisch isolierender und thermisch leitfähiger Kunststoff zum Umspritzen verwendet.

Dadurch ist gewährleistet, dass der Temperatursensor weiterhin ein schnelles Ansprechverhalten sowie eine hohe Messgenauigkeit besitzt.

In der Darstellung der Fig. 11 führt die Umspritzung mit dem Kunststoff 25 zu einer kreiszylinderförmigen Außenkontur des Sensors 2. Der Sensor 2 ist somit bei Bedarf einfach in ein hülsenförmiges Gehäuse (nicht dargestellt) einsetzbar. Die kreiszylinderförmige Außenkontur gewährleistet zudem, dass die beiden Messwiderstände 5 gleichmäßig mit dem Kunststoff 25 überdeckt sind. Anstelle einer kreiszylinderförmigen Außenkontur kann der Sensor 2 aber auch eine zylinderförmige Außenkontur aufweisen, die nicht auf einem Kreis als Grundform, sondern auf einem Dreieck, insbesondere auf einem gleichseitigen Dreieck, oder auf einem Quadrat beruht (nicht dargestellt). Die optimale Grundform hängt insbesondere von der Anzahl der Messwiderstände 5 und/oder von der konkreten Querschnittsform des Trägerelements 1 ab.

Bei der Herstellung der Umspritzung mit dem Kunststoff 25 wird das Trägerelement 1 einschließlich der Messwiderstände 5 und den Anschlussdrähten 9, 17 in eine Spritzgießform eingelegt, wobei sich die hohe Formsteifigkeit des Trägerelements 1 und die drehsymmetrische Ausbildung als Vorteil erweisen. Denn auf diese Weise können die Messwiderstände 5 exakt in der Form positioniert und gleichmäßig mit Kunststoff 25 umspritzt werden. Der in die Form einströmende Kunststoff 25 vermag das Trägerelement 1 nicht wegzudrängen.

### Bezugszeichenliste

- 1: Trägerelement
- 2: Sensor
- 3: Endabschnitt
- 4: Aufnahme
- 5: Messwiderstand
- 6: Abschnitt
- 7: Steg
- 8: Führung
- 9: Anschlussdraht
- 10: Anlagefläche
- 11: Steg
- 12: Seitenfläche
- 13: Steg
- 14: Endabschnitt
- 15: Steg
- 16: Führung
- 17: Anschlussdraht
- 18: Anschlusskabel
- 19: Seitenfläche
- 20: Klemmnase
- 21: Klemmnase
- 22: Steg
- 23: Abschnitt
- 24: Aufdickung
- 25: Kunststoff

## Patentansprüche

1. Trägerelement (1) für einen elektrischen Sensor (2), insbesondere für einen Temperatursensor, das länglich ausgeführt ist und in einem ersten Endabschnitt (3) eine Aufnahme (4) für einen Messwiderstand (5) sowie in einem an den Endabschnitt (3) anschließenden weiteren Abschnitt (6) mindestens zwei sich in Längsrichtung erstreckende und durch einen Steg (7) voneinander getrennte Führungen (8) zur Führung von Anschlussdrähten (9) aufweist,
**dadurch gekennzeichnet, dass** das Trägerelement (1) zumindest im Bereich des ersten Endabschnitts (3) und des weiteren Abschnitts (6) drehsymmetrisch ausgebildet ist, so dass es durch Drehung um eine Längsachse (A) um einen Winkel (α) auf sich selbst abbildbar ist und mindestens zwei Aufnahmen (4) und mindestens vier Führungen (8) aufweist, wobei vorzugsweise der Winkel (α) 180°, 120° oder 90° beträgt.

2. Trägerelement (1) nach Anspruch 1,
**dadurch gekennzeichnet, dass** das Trägerelement (1) eine zentrale, massiv ausgebildete Tragstruktur aufweist, die sich zumindest über den ersten Endabschnitt (3) und den weiteren Abschnitt (6) erstreckt.

3. Trägerelement (1) nach Anspruch 1 oder 2,
**dadurch gekennzeichnet, dass** jeweils eine Aufnahme (4) und zwei Führungen (8) zu einer Längsseite des Trägerelements (1) hin geöffnet sind, wobei es sich um dieselbe Längsseite handelt.

4. Trägerelement (1) nach einem der vorhergehenden Ansprüche,
**dadurch gekennzeichnet, dass** jeweils eine Aufnahme (4) eine sich vorzugsweise parallel zur Längsachse (A) erstreckende Anlagefläche (10) für den Messwiderstand (5) aufweist, die weiterhin vorzugsweise stirnseitig und/oder an mindestens einer Längsseite durch einen Steg (11) begrenzt ist.

5. Trägerelement (1) nach einem der vorhergehenden Ansprüche,
**dadurch gekennzeichnet, dass** der die Führungen (8) voneinander trennende Steg (7) zumindest abschnittsweise parallel verlaufende Seitenflächen (12) aufweist, die zur Aufnahme (4) hin schräg aufeinander zulaufen.

6. Trägerelement (1) nach einem der vorhergehenden Ansprüche,
**dadurch gekennzeichnet, dass** dem Steg (7) an den Führungen (8) zumindest abschnittsweise weitere Stege (13) zur außenseitigen Begrenzung der Führungen (8) gegenüberliegen.

7. Trägerelement (1) nach einem der vorhergehenden Ansprüche,
**dadurch gekennzeichnet, dass** das Trägerelement (1) in einem zweiten Endabschnitt (14) mindestens zwei sich in Längsrichtung erstreckende und durch einen Steg (15) voneinander getrennte Führungen (16) zur Führung von Anschlussdrähten (17) eines Anschlusskabels (18) aufweist, wobei vorzugsweise der Steg (15) in Verlängerung des Stegs (7) angeordnet ist.

8. Trägerelement (1) nach Anspruch 7,
**dadurch gekennzeichnet, dass** der Steg (15) Seitenflächen (19) aufweist, die Klemmnasen (20) ausbilden, wobei vorzugsweise die Klemmnasen (20) axial versetzt in Bezug auf weitere Klemmnasen (21) angeordnet sind, die durch Stege (22) ausgebildet werden, die dem Steg (15) an den Führungen (16) gegenüberliegen.

9. Trägerelement (1) nach Anspruch 7 oder 8,
**dadurch gekennzeichnet, dass** der Steg (15) und der Steg (7) in einem axialen Abstand zueinander angeordnet sind, der einen Abschnitt (23) des Trägerelements (1) zur Herstellung einer elektrischen Verbindung der Anschlussdrähte (9) mit den Anschlussdrähten (17) definiert.

10. Trägerelement (1) nach einem der Ansprüche 7 bis 9,
**dadurch gekennzeichnet, dass** der zweite Endabschnitt (14) stirnseitig eine zentrale Ausnehmung zum Einführen des Anschlusskabels (18) aufweist, wobei vorzugsweise die Führungen (16) zur Führung der Anschlussdrähte (17) in die Ausnehmung münden.

11. Trägerelement (1) nach einem der vorhergehenden Ansprüche,
**dadurch gekennzeichnet, dass** das Trägerelement (1) aus Kunststoff, insbesondere aus einem elektrisch isolierenden und thermisch leitfähigen Kunststoff, gefertigt ist.

12. Trägerelement (1) nach einem der vorhergehenden Ansprüche,
**dadurch gekennzeichnet, dass** das Trägerelement (1) ein Spritzgussteil ist.

13. Elektrischer Sensor (1), insbesondere Temperatursensor, mit einem Trägerelement (1) nach einem der vorhergehenden Ansprüche und mit mindestens einem Anschlussdrähte (9) aufweisenden Messwiderstand (5), wobei der Messwiderstand (5) in einer Aufnahme (4) des Trägerelements (1) und die Anschlussdrähte (9) in Führungen (8) des Trägerelements (1) aufgenommen sind.

14. Elektrischer Sensor (1) nach Anspruch 13,
**dadurch gekennzeichnet, dass** die Anschlussdrähte (9) mit Anschlussdrähten (17) eines Anschlusskabels (18) elektrisch verbunden sind, die in Führungen (16) des Trägerelements (1) aufgenommen sind.

15. Elektrischer Sensor (1) nach Anspruch 13 oder 14,
**dadurch gekennzeichnet, dass** das Trägerelement (1) einschließlich des Messwiderstands (5) und der Anschlussdrähte (9, 17) mit Kunststoff (25) umspritzt sind, wobei vorzugsweise der Kunststoff (25) ein elektrisch isolierender und thermisch leitfähiger Kunststoff ist.

16. Verfahren zur Herstellung eines elektrischen Sensors (1), insbesondere eines Temperatursensors, bei dem ein Trägerelement (1) nach einem der Ansprüche 1 bis 13 mit mindestens einem Anschlussdrähte (9) aufweisenden Messwiderstand (5) bestückt wird, wobei der Messwiderstand (5) in eine Aufnahme (4) des Trägerelements (1) eingesetzt und, vorzugsweise durch mechanisches oder thermisches Verstemmen, lagefixiert wird.

17. Verfahren nach Anspruch 16,
**dadurch gekennzeichnet, dass** beim Einsetzen des Messwiderstands (5) in die Aufnahme (4) die Anschlussdrähte (9) in Führungen (8) eingelegt werden.

18. Verfahren nach Anspruch 16 oder 17,
**dadurch gekennzeichnet, dass** die Anschlussdrähte (9) mit Anschlussdrähten (17) eines Anschlusskabels (18) elektrisch verbunden werden, wobei vorzugsweise die elektrische Verbindung durch Verlöten, Verkleben, Verklemmen und/oder Verstemmen der Anschlussdrähte (9, 17) hergestellt wird, die hierzu bevorzugt abschnittsweise überlappend angeordnet sind.

19. Verfahren nach einem der Ansprüche 16 bis 18,
**dadurch gekennzeichnet, dass** das Trägerelement (1) einschließlich des mindestens einen Messwiderstands (5) und der Anschlussdrähte (9, 17) in eine Spritzgießform eingelegt und mit Kunststoff (25) umspritzt wird, wobei vorzugsweise ein elektrisch isolierender und thermisch leitfähiger Kunststoff (25) verwendet wird.

## Claims

1. A carrier element (1) for an electrical sensor (2), in particular for a temperature sensor, which is of elongated design and has a receptacle (4) for a measuring resistor (5) in a first end section (3) and at least two guides (8) for guiding connecting wires (9), which extend in the longitudinal direction and are separated from one another by a web (7), in a further section (6) adjoining the end section (3),
**characterized in that** the carrier element (1) is rotationally symmetrical at least in the region of the first end section (3) and the further section (6) so that it can be imaged onto itself by rotation about a longitudinal axis (A) through an angle (α) and has at least two receptacles (4) and at least four guides (8), the angle (α) preferably being 180°, 120° or 90°.

2. The carrier element (1) according to claim 1,
**characterized in that** the carrier element (1) has a central, solidly formed carrier structure which extends at least over the first end portion (3) and the further portion (6).

3. The carrier element (1) according to claim 1 or 2,
**characterized in that** a receptacle (4) and two guides (8), respectively, are open towards a longitudinal side of the carrier element (1), said longitudinal side being the same.

4. The carrier element (1) according to any one of the preceding claims,
**characterized in that** each receptacle (4) has a contact surface (10) for the measuring resistor (5), preferably extending parallel to the longitudinal axis (A), which is further preferably limited at the end face and/or on at least one longitudinal side by a web (11).

5. The carrier element (1) according to any one of the preceding claims,
**characterized in that** the web (7) separating the guides (8) from one another has, at least in sections, parallel side faces (12) which converge obliquely towards the receptacle (4).

6. The carrier element (1) according to any one of the preceding claims,
**characterized in that** further webs (13) for the external delimitation of the guides (8) lie opposite the web (7) on the guides (8) at least in sections.

7. The carrier element (1) according to any one of the preceding claims,
**characterized in that** the carrier element (1) has in a second end section (14) at least two guides (16) extending in the longitudinal direction and separated from each other by a web (15) for guiding connecting wires (17) of a connecting cable (18), preferably the web (15) being arranged in extension of the web (7).

8. The carrier element (1) according to claim 7,
**characterized in that** the web (15) has side surfaces (19) forming clamping lugs (20), preferably the clamping lugs (20) being arranged axially offset with respect to further clamping lugs (21) formed by webs (22) facing the web (15) at the guides (16).

9. The carrier element (1) according to claim 7 or 8,
**characterized in that** the web (15) and the web (7) are arranged at an axial distance from each other which defines a portion (23) of the carrier element (1) for establishing an electrical connection of the connecting wires (9) with the connecting wires (17).

10. The carrier element (1) according to any one of claims 7 to 9,
**characterized in that** the second end section (14) has a central recess at the end face for the insertion of the connecting cable (18), preferably the guides (16) for guiding the connecting wires (17) opening into the recess.

11. The carrier element (1) according to any one of the preceding claims,
**characterized in that** the carrier element (1) is made of plastic, in particular of an electrically insulating and thermally conductive plastic.

12. The carrier element (1) according to any one of the preceding claims,
**characterized in that** the carrier element (1) is an injection molded part.

13. An electrical sensor (1), in particular temperature sensor, having a carrier element (1) according to any one of the preceding claims and having at least one measuring resistor (5) with connecting wires (9), the measuring resistor (5) being accommodated in a receptacle (4) of the carrier element (1) and the connecting wires (9) being accommodated in guides (8) of the carrier element (1).

14. The electrical sensor (1) according to claim 13,
**characterized in that** the connecting wires (9) are electrically connected to connecting wires (17) of a connecting cable (18), which are received in guides (16) of the carrier element (1).

15. The electrical sensor (1) according to claim 13 or 14,
**characterized in that** the carrier element (1) including the measuring resistor (5) and the connecting wires (9, 17) are overmolded with plastic (25), preferably the plastic (25) being an electrically insulating and thermally conductive plastic.

16. A method for producing an electrical sensor (1), in particular a temperature sensor, in which a carrier element (1) is equipped with at least one measuring resistor (5) having connecting wires (9) according to any one of claims 1 to 13, the measuring resistor (5) being inserted into a receptacle (4) of the carrier element (1) and being fixed in position, preferably by mechanical or thermal caulking.

17. The method according to claim 16,
**characterized in that** when the measuring resistor (5) is inserted into the receptacle (4), the connecting wires (9) are inserted into guides (8).

18. The method according to claim 16 or 17,
**characterized in that** the connecting wires (9) are electrically connected to connecting wires (17) of a connecting cable (18), the electrical connection preferably being established by soldering, bonding, clamping and/or caulking the connecting wires (9, 17), which for this purpose are preferably arranged overlapping in sections.

19. The method according to any one of the claims 16 to 18,
**characterized in that** the carrier element (1) including the at least one measuring resistor (5) and the connecting wires (9, 17) are inserted into an injection mould and are overmolded with plastic (25), wherein preferably an electrically insulating and thermally conductive plastic (25) is used.

## Revendications

1. Élément de support (1) pour un capteur électrique (2), en particulier pour un capteur de température, ayant une forme allongée et comportant, dans une première partie d'extrémité (3), un logement (4) pour une résistance de mesure (5) ainsi que, dans une partie supplémentaire (6) adjacente à la partie d'extrémité (3), au moins deux guides (8) séparés l'un de l'autre par une nervure (7) et s'étendant dans la direction longitudinale, pour guider des fils de connexion (9),
**caractérisé en ce que** l'élément de support (1) est formé avec une symétrie de rotation au moins dans la zone de la première partie d'extrémité (3) et de la partie supplémentaire (6), de sorte qu'il peut être reproduit par rotation sur lui-même d'un angle (α) autour d'un axe longitudinal (A) et comporte au moins deux logements (4) et au moins quatre guides (8), dans lequel l'angle (α) est de préférence égal à 180°, 120° ou 90°.

2. Élément de support (1) selon la revendication 1,
**caractérisé en ce que** l'élément de support (1) comporte une structure porteuse centrale, de construction massive, qui s'étend sur au moins la première partie d'extrémité (3) et la partie supplémentaire (6).

3. Élément de support (1) selon la revendication 1 ou 2,
**caractérisé en ce qu'**un logement (4) et deux guides (8) sont respectivement ouverts vers un côté longitudinal de l'élément de support (1), le côté longitudinal étant le même.

4. Élément de support (1) selon l'une des revendications précédentes,
**caractérisé en ce qu'**un logement (4) comporte respectivement une surface de pose (10) pour la résistance de mesure (5) s'étendant de préférence parallèlement à l'axe longitudinal (A), laquelle est en outre délimitée de préférence frontalement et/ou sur au moins un côté longitudinal par une nervure (11).

5. Élément de support (1) selon l'une des revendications précédentes,
**caractérisé en ce que** la nervure (7) séparant les guides (8) l'un de l'autre comporte des faces latérales (12) s'étendant au moins partiellement parallèlement, lesquelles surfaces latérales convergent en biais vers le logement (4).

6. Élément de support (1) selon l'une des revendications précédentes,
**caractérisé en ce que** des nervures supplémentaires (13) font face au moins partiellement à la nervure (7) sur les guides (8) pour délimiter les guides (8) du côté extérieur.

7. Élément de support (1) selon l'une des revendications précédentes,
**caractérisé en ce que** l'élément de support (1) comporte, dans une seconde partie d'extrémité (14), au moins deux guides (16) séparés l'un de l'autre par une nervure (15) et s'étendant dans la direction longitudinale, pour guider des fils de connexion (17) d'un câble de connexion (18), dans lequel la nervure (15) est de préférence agencée dans le prolongement de la nervure (7).

8. Élément de support (1) selon la revendication 7,
**caractérisé en ce que** la nervure (15) comporte des faces latérales (19) qui forment des ergots de serrage (20), dans lequel les ergots de serrage (20) sont de préférence décalés axialement par rapport à des ergots de serrage supplémentaires (21) qui sont formés par des nervures (22) faisant face à la nervure (15) sur les guides (16).

9. Élément de support (1) selon la revendication 7 ou 8,
**caractérisé en ce que** la nervure (15) et la nervure (7) sont agencées à une distance axiale l'une de l'autre, laquelle définit une partie (23) de l'élément de support (1) pour établir une connexion électrique des fils de connexion (9) avec les fils de connexion (17).

10. Élément de support (1) selon l'une des revendications 7 à 9,
**caractérisé en ce que** la seconde partie d'extrémité (14) comporte frontalement un évidement central pour introduire le câble de connexion (18), dans lequel les guides (16) débouchent de préférence dans l'évidement pour guider les fils de connexion (17).

11. Élément de support (1) selon l'une des revendications précédentes,
**caractérisé en ce que** l'élément de support (1) est fabriqué en matière plastique, en particulier en une matière plastique électriquement isolante et thermiquement conductrice.

12. Élément de support (1) selon l'une des revendications précédentes,
**caractérisé en ce que** l'élément de support (1) est une pièce moulée par injection.

13. Capteur électrique (1), en particulier capteur de température, doté d'un élément de support (1) selon l'une des revendications précédentes et d'au moins une résistance de mesure (5) comportant des fils de connexion (9), dans lequel la résistance de mesure (5) est reçue dans un logement (4) de l'élément de support (1) et les fils de connexion (9) sont reçus dans des guides (8) de l'élément de support (1).

14. Capteur électrique (1) selon la revendication 13,
**caractérisé en ce que** les fils de connexion (9) sont électriquement reliés à des fils de connexion (17) d'un câble de connexion (18) qui sont reçus dans des guides (16) de l'élément de support (1).

15. Capteur électrique (1) selon la revendication 13 ou 14,
**caractérisé en ce que** l'élément de support (1) incluant la résistance de mesure (5) et les fils de connexion (9, 17) est surmoulé par injection d'une matière plastique (25), dans lequel la matière plastique (25) est de préférence une matière plastique électriquement isolante et thermiquement conductrice.

16. Procédé de fabrication d'un capteur électrique (1), en particulier d'un capteur de température, dans lequel un élément de support (1) selon l'une des revendications 1 à 13 est équipé d'au moins une résistance de mesure (5) comportant des fils de connexion (9), dans lequel la résistance de mesure (5) est insérée dans un logement (4) de l'élément de support (1) et est de préférence fixée en position par un matage mécanique ou thermique.

17. Procédé selon la revendication 16,
**caractérisé en ce que** lors de l'insertion de la résistance de mesure (5) dans le logement (4), les fils de connexion (9) sont insérés dans des guides (8).

18. Procédé selon la revendication 16 ou 17,
**caractérisé en ce que** les fils de connexion (9) sont électriquement reliés à des fils de connexion (17) d'un câble de connexion (18), dans lequel la connexion électrique est de préférence établie par brasage, collage, sertissage et/ou matage des fils de connexion (9, 17), lesquels sont de préférence agencés partiellement superposés.

19. Procédé selon l'une des revendications 16 à 18,
**caractérisé en ce que** l'élément de support (1) incluant la au moins une résistance de mesure (5) et les fils de connexion (9, 17) est placé dans un moule à injection et est surmoulé par injection d'une matière plastique (25), dans lequel une matière plastique (25) électriquement isolante et thermiquement conductrice est de préférence utilisée.
